# EUROPÄISCHE PATENTSCHRIFT

(11) **EP 2 629 644 B1**
(45) Veröffentlichungstag und Bekanntmachung des Hinweises auf die Patenterteilung: **01.04.2015**
(21) Anmeldenummer: 11778507.1
(22) Anmeldetag: 04.10.2011
(51) Int. Cl.: A47B 81/00

(54) **BESCHLAG FÜR MÖBEL ODER DERGLEICHEN**
FITTING OF FURNITURE OR THE LIKE
FERRURE POUR MEUBLE OU ANALOGUE

(30) Priorität: 18.10.2010 DE 202010014343 U
(43) Veröffentlichungstag der Anmeldung: 28.08.2013
(73) Patentinhaber: Kesseböhmer Holding e.K., 49152 Bad Essen (DE)
(72) Erfinder: BARO, Dietmar, 49080 Osnabrück (DE); KREYENKAMP, Reiner, 49152 Bad Essen (DE); MARTLING, Frank, 49152 Bad Essen (DE)
(74) Vertreter: Busse & Busse
(86) Internationale Anmeldenummer: PCT/EP2011/004922
(87) Internationale Veröffentlichungsnummer: WO 2012/052112

(56) Entgegenhaltungen:
- DE-C- 347 563
- DE-U1-202005 005 888
- DE-U1-202010 002 232
- FR-A1- 2 278 978

## Beschreibung

Die Erfindung bezieht sich auf einen Beschlag für Möbel oder dergleichen insbesondere für Schränke wie beispielsweise Kücheneckschränke. Daneben ist der Beschlag auch geeignet, an Dreh- und Schwenksäulen von z.B. Raumteilern, Garderobenständer oder ähnlichen Gegenständen verwendet zu werden. Insbesondere dient der Beschlag zur schwenkbaren Halterung von Gegenständen wie beispielsweise Tablaren in z.B. Kücheneckschränken, die schwenkbeweglich an einem Halter, beispielsweise an einer Tragsäule über einen Verbinder abstützbar sind.

Beschläge der vorgenannten Art, beispielsweise solche, die zur schwenkbaren Halterung von Tablaren in Kücheneckschränken dienen, sind aus der EP 1 949 817 B1 bekannt. Diese haben rohrförmig ausgebildete Verbinder, die vor Einsatz in einen Kücheneckschrank an dem Rohr einer Tragsäule zu montieren sind. Die Tragsäule mitsamt dem Verbinder und daran befestigten Tragarmen ist dann in den Kücheneckschrank einzusetzen. Soll die Tragsäule mit weiteren Verbindern versehen werden, um z.B. weitere Tablare versehen zu können, ist dies erst nach Demontage der Tragsäule und der entsprechenden Verbinder und daran befestigten Tablaren möglich. Ein weiterer Beschlag ist aus FR 2 278 978 A bekannt.

Es ist Aufgabe der vorliegenden Erfindung, einen Beschlag für Möbel oder dergleichen Gegenstände zur Verfügung zu stellen, der es ermöglicht, möglichst werkzeuglos auch Verbinder an Haltern zu befestigen, wenn diese schon z.B. in einem Möbel eingesetzt worden sind.

Zur Lösung dieser Aufgabe zeichnet sich der Beschlag der eingangs genannten Art dadurch aus, dass der Halter einen oberen und einen unteren Kragen aufweist, an dem sich oberseitig und unterseitig der Verbinder im Montierten Zustand abstützt.

Damit ist ein Beschlag geschaffen, der werkzeuglos an dem Halter, beispielsweise einer vertikal ausgerichteten Tragsäule in einem Kücheneckschrank festzulegen ist, indem beispielsweise nach entsprechender Schrägstellung zunächst der Verbinder so an den Halter herangeführt wird, dass dieser durch den Spalt eingefädelt werden kann und danach der Verbinder so an den Halter herangeführt wird, dass sich der Verbinder mit seinem Arm an dem Halter, beispielsweise der vertikal ausgerichteten Tragsäule, abstützt. Somit bildet der Verbinder gleichfalls eine offene Lagerbuchse aus. Halter und der Arm haben zweckmäßigerweise eine runde Form bzw. sind der runden Form angeglichen, so dass die Innenbereiche der Arme die genante Lagerbuchse des Verbinders an dem Halter bilden und Lagerstellen bilden, über die der Verbinder schwenkbeweglich an dem Halter abgestützt werden kann. Der Verbinder kann einstückig mit einem weiteren Tragarmen ausgebildet sein, um beispielsweise ein Tablar oder ähnliches zu halten bzw. abzustützen. Der Beschlag ist mithin ein universell verwendbares Teil und kann nicht nur eingesetzt werden in Möbel, sondern beispielsweise auch an Vertikalsäulen, die frei in einem Raum stehen wie beispielsweise Raumteiler.

Mit dem Beschlag nach der Erfindung ist es ebenfalls möglich, z.B. mit wenigen Handgriffen einen über den Verbinder gehalterten Gegenstand von dem Halter zu entfernen und beispielsweise gegen einen anderen Gegenstand entsprechend dem Halter auszutauschen. Auch ist es möglich, beispielsweise lediglich zu Reinigungszwecken eines Gegenstandes den Gegenstand mitsamt dem Verbinder von dem Halter zu lösen und nach Durchführung der entsprechenden Reinigungsarbeiten dort wieder anzubinden. Dies ist alles werkzeuglos möglich.

Bevorzugterweise ist der Verbinder an einem Befestigungselement abzustützen, an dem die oberen und unteren Kragen ausgebildet sind, an dem sich bei vertikaler Montage des Halters der Verbinder oben und unten abstützt. Dieses Befestigungselement kann, wie auch eine Weiterbildung der Erfindung vorsieht, höhenverstellbar an dem Halter festgelegt werden. Dazu kann in einer einfachen Ausgestaltung der Halter mit einer entsprechenden Lochreihe versehen sein, in die ein Pin oder dergleichen Verbindungselement einrasten kann, um die höhenverstellbare Festlegung des Befestigungselementes an dem Halter zu gewährleisten.

Weitere vorteilhafte Ausgestaltungen ergeben sich aus weiteren Unteransprüchen, der nachfolgenden Beschreibung und der Zeichnung. In der Zeichnung zeigen:

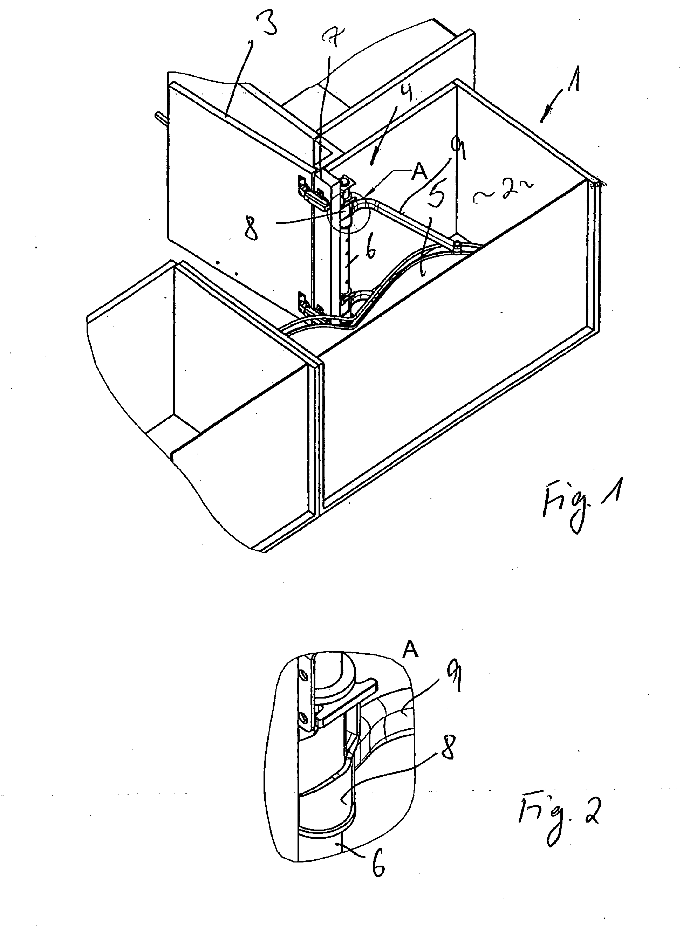

- Fig. 1: ein Ausführungsbeispiel eines Beschlages nach der Erfindung im montierten Zustand am Beispiel eines perspektivisch dargestellten Kücheneckschrankes;
- Fig. 2: vergrößert das Detail "A" aus Fig. 1;
- Fig. 3 bis Fig. 5: den Halter und den Verbinder während der Montage des Verbinders an dem Halter;
- Fig. 6: in einer perspektivischen Darstellung ein nicht erfindungsgemäßes Ausführungsbeispiel eines Verbinders;
- Fig. 7: das in Fig. 6 gezeigte nicht erfindungsgemäße Ausführungsbeispiel in einer montierten Stellung des Verbinders an der Tragsäule;
- Fig. 8: eine Ansicht auf ein durchgeschnittenes Tragrohr mit daran angeordnetem Befestigungselement;
- Fig. 9: Darstellung der Montage des nicht erfindungsgemäßes Ausführungsbeispiels nach den Fig. 6 und 7 in verschiedenen Montagestellungen;
- Fig. 10: ein weiteres nicht erfindungsgemäßes Ausführungsbeispiel eines Verbinders;
- Fig. 11: das in Fig. 10 gezeigte nicht erfindungsgemäße Ausführungsbeispiel in der montierten Stellung an der Tragsäule;
- Fig. 12: die verschiedenen Montagestellungen während der Montage des nicht erfindungsgemäßes Ausführungsbeispiels nach den Fig. 10 bis 11.

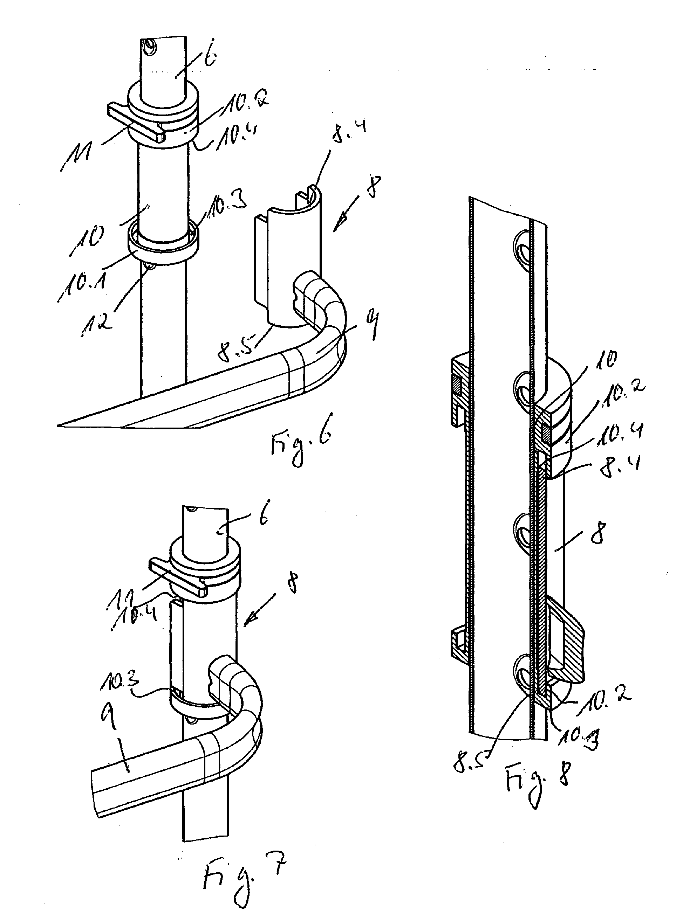

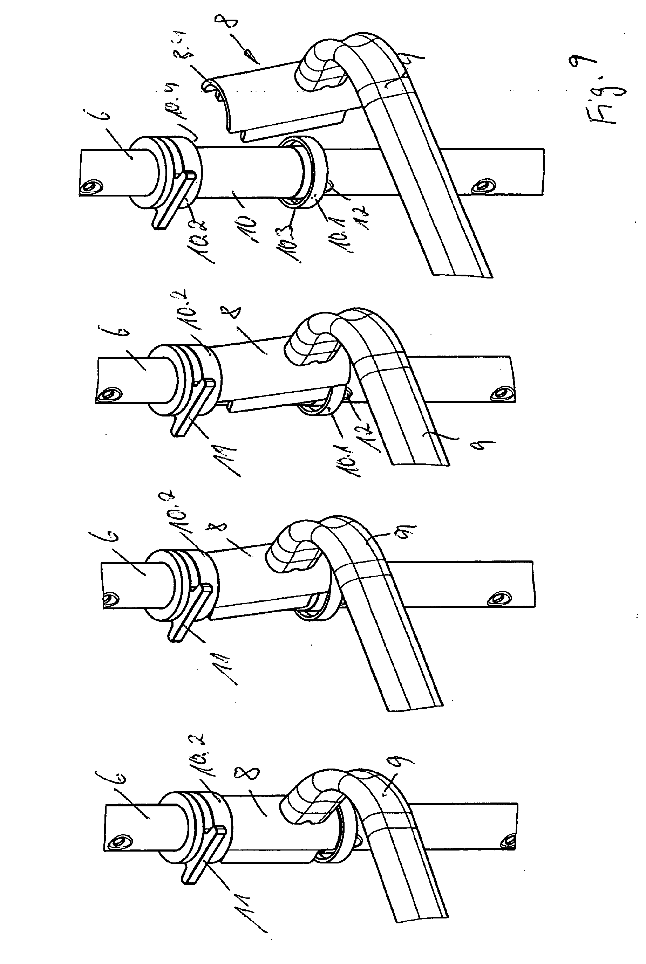

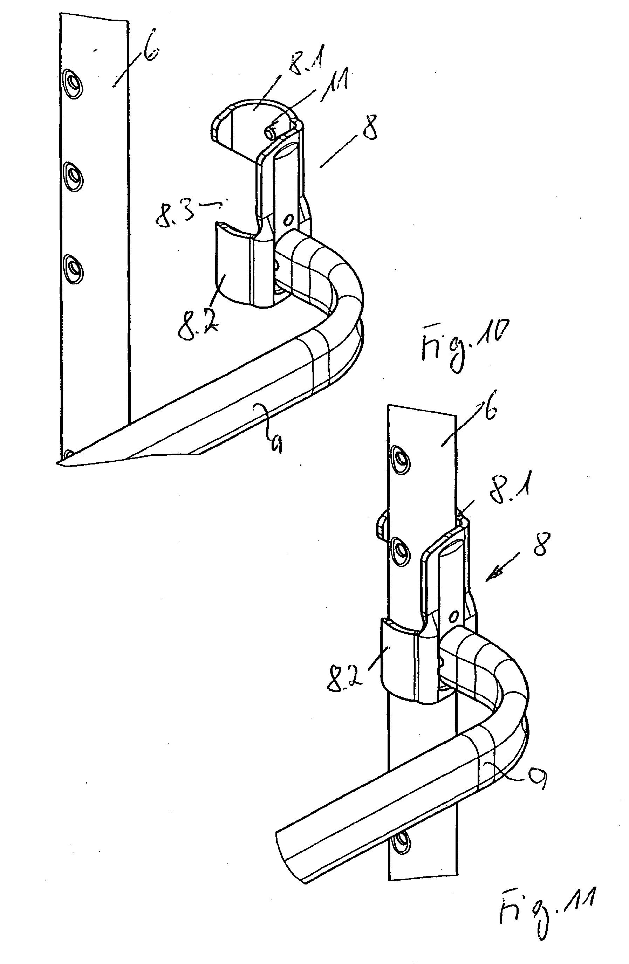

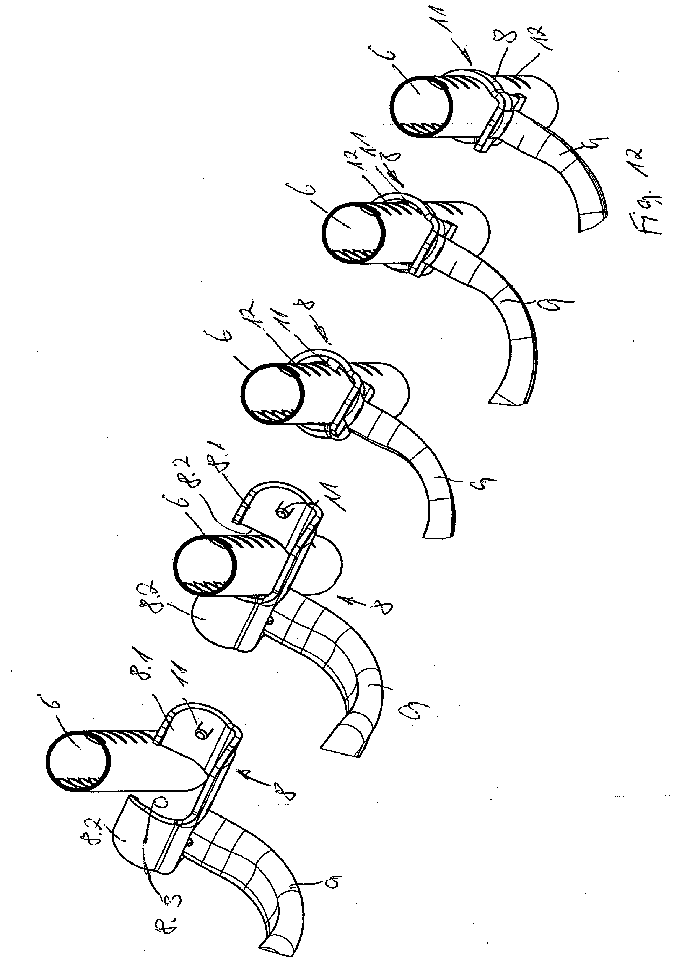

In dem nicht erfindungsgemäßen Ausführungsbeispiel nach den Fig. 6 und 7 ist der Verbinder 8 halbschalenförmig ausgebildet und hat einen oberen und einen unteren Randansatz 8.4 und 8.5, die in entsprechende Ausnehmungsräume 10.3 und 10.4 an dem Befestigungselement vorgesehen sind. Aus Fig. 9 ist ersichtlich, ausgehend von der Montagestellung rechts über die beiden mittleren Darstellungen bis zur Montagestellung links, wie der Verbinder 8 werkzeuglos zu montieren ist, und sich in der Endmontagestellung sicher an der vertikalen Tragsäule 6 sowie an den Teilen 10.1 und 10.3 und 10.4 abstützt. In den Fig. 10, 11 und 12 ist ein weiteres nicht erfindungsgemäßes Ausführungsbeispiel eines Verbinders gezeigt. Dieser Verbinder 8 hat zwei gegensinnig ausgerichtete Arme 8.1 und 8.2. Darüber hinaus ist an dem Arm 8.1 direkt ein Rastansatz 11 vorgesehen, der ein entsprechendes Loch in der vertikalen Tragsäule einzubringen ist. Dazu ist auch wiederum ein Spalt 8.3. ausgebildet, durch den die vertikale Tragsäule 6 eingefädelt werden kann, wie dies im Einzelnen die Darstellungen nach Fig. 12 zeigen. In der Endmontagestellung nach Fig. 11, ist die Rastanformung in ein entsprechendes Loch in der vertikalen Tragsäule 6 eingeführt, so dass dadurch der Verbinder 8 mit dem Arm 9 sicher gehalten ist.

In der Zeichnung sind grundsätzlich gleichwirkende Teile mit übereinstimmenden Bezugsziffern versehen. Allgemein mit 1 ist ein Kücheneckschrank beziffert, der einen Innenraum 2 aufweist, der über eine aufschwenkbare Tür 3 zugänglich ist. Dieser Kücheneckschrank mit dem allgemein mit 4 bezifferten Beschlag und dem über den Beschlag gehalterten Tablar 5 soll von der grundsätzlichen Bewegung des Tablars 5 oder der Tablare 5 so gestaltet sein, wie dies in der EP 1 949 817 B1 offenbart ist.

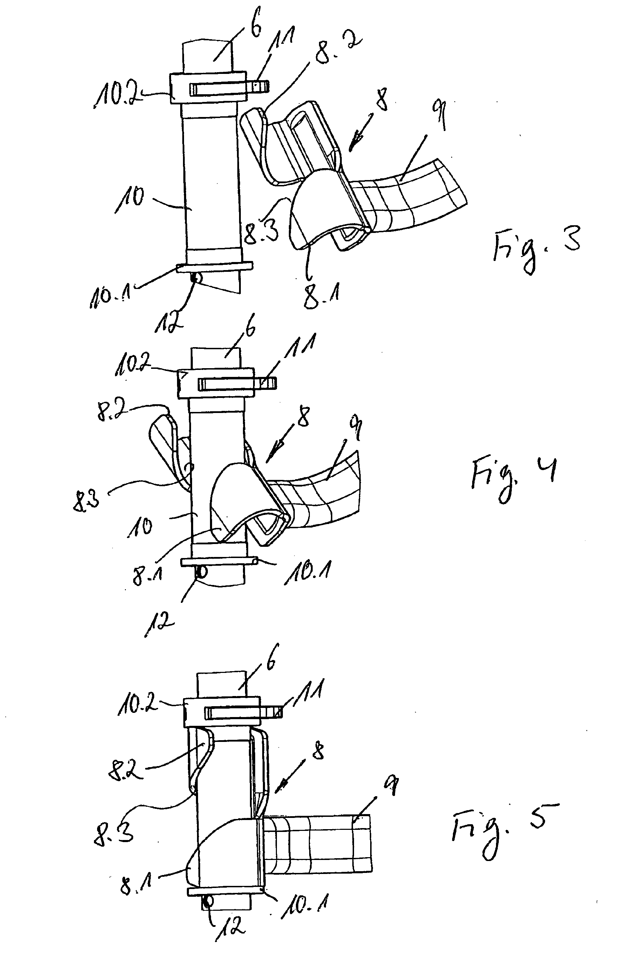

Als Halter 6 umfasst der Beschlag 4 eine vertikal ausgerichtete Tragsäule, die an der der Tür 3 benachbarten Wandung 7 des Kücheneckschrankes 1 angeschraubt ist. An der Tragsäule 6 sind über den Verbinder 8 Tragarme 9 für das Tablar 5 gehaltert. Wie im Einzelnen näher aus den Fig. 3 bis 5 hervorgeht, hat der Verbinder 8 für den Tragarm 9 zwei gegensinnig ausgerichtete Arme 8.1 und 8.2, die zwischen sich einen Spalt 8.3 ausbilden. Die Endbereiche der Tragarme 8.1 und 8.2 überlappen sich mit einem Höhenabstand. Der Höhenabstand wird durch den Schlitz 8.3 bestimmt. Ansonsten folgen die gegensinnig ausgerichteten Tragarme 8.1 und 8.2 hinsichtlich ihrer Kontur dem an der Tragsäule 6 befestigten Befestigungselement 10, das einen unteren Kragen 10.1 und einen oberen Kragen 10.2 aufweist. An diesem Befestigungselement 10 ist im Bereich des Kragens 10.2 ein Clip 11 befestigt, der ein nicht im einzelnen ersichtliches Rastelement trägt, das in entsprechende Löcher 12 zur Höhenverstellung an der Tragsäule 6 einrasten kann.

In Fig. 3 ist der Zustand des Verbinders 8 vor der Montage an dem Halter bzw. der Tragsäule 6 gezeigt. Der Verbinder 8 mitsamt dem Tragarm ist in einer leicht schrägen bzw. gekippten Stellung gezeigt, so dass die Tragsäule 6 mit ihrem Befestigungselement 10 in den Spalt 8.3 eingeführt bzw. eingefädelt werden kann.

In Fig. 4 ist die weitere Bewegung während der Montage gezeigt, indem dort das Befestigungselement 10 bzw. der Halter 6 in den Spalt 8.3 eingeführt ist, so dass dieser durch eine Kipp- bzw. Schwenkbewegung zurück in die in Fig. 5 gezeigte Montageendstellung gebracht werden kann. Es ist ersichtlich, dass dies alles ohne Werkzeuge zu vollziehen ist.

In umgekehrter Reihenfolge kann der Verbinder von der Tragsäule 6 wieder demontiert werden. Im montierten Zustand stützt sich der Verbinder mit den Innenflächen der gegensinnig ausgerichteten Arme 8.1 und 8.2 an dem Befestigungselement 10 bzw. der Tragsäule ab. Nach unten und oben hin ist er durch die Kragen 10.1 und 10.2 begrenzt und somit auch dort entsprechend abgestützt.

## Patentansprüche

1. Beschlag (4) für Möbel oder dergleichen, insbesondere für Schränke wie beispielsweise Kücheneckschränke (1), zur schwenkbaren Halterung von Gegenständen wie beispielsweise Tablaren (5), mit einem Halter (6), beispielsweise einer Tragsäule, über den Gegenstände wie Tablare (5) über einen Verbinder (8) abgestützt sind, wobei der Verbinder (8) zumindest einen eine offene Lagerbuchse ausbildenden Verbinderarm (8.1, 8.2) zum bereichsweisen Umgreifen des Halters (6) aufweist und an dem Verbinder (8) ein Spalt (8.3) ausgebildet ist, über den der Halter (6) in einen Innenraum des Armes (8.1, 8.2) des Verbinders zur Montage des Verbinders (8) an dem Halter (6) einführbar ist, wobei der Verbinder zwei gegensinnig ausgerichtete Verbinderarme (8.1, 8.2) aufweist, der Spalt (8.3) zwischen den Armen (8.1, 8.2) ausgebildet ist, der Innenraum durch den Raum zwischen den Armen (8.1, 8.2) gebildet ist, **dadurch gekennzeichnet**, dass der Halter (6) einen oberen und einen unteren Kragen (10.1, 10.2) aufweist, an dem sich oberseitig und unterseitig der Verbinder (8) im montierten Zustand abstützt.

2. Beschlag nach Anspruch 1, **dadurch gekennzeichnet**, dass sich die Endbereiche der gegensinnig ausgerichteten Arme (8.1, 8.2) mit Höhenabstand zueinander überlappen.

3. Beschlag nach einem der Ansprüche 1 oder 2, **dadurch gekennzeichnet,** dass der zwischen den Armen (8.1, 8.2) ausgebildete Spalt (8.3) eine Schrägausrichtung und die einander zugewandten benachbarten Kanten der Arme (8.1, 8.2) schräg ausgebildete Bereiche haben, wobei sich die Endbereiche der Arme (8.1, 8,2) zu ihren Enden hin verkleinern.

4. Beschlag nach einem der Ansprüche 1 bis 3, **dadurch gekennzeichnet,** dass der Verbinder (8) an dem Halter werkzeuglos (6) montierbar ist.

5. Beschlag nach einem der Ansprüche 1 bis 4, **dadurch gekennzeichnet,** dass der Verbinder (8) an dem Halter (6) über ein höhenverstellbar an dem Halter festlegbares Befestigungselement (10) abgestützt ist.

6. Beschlag nach Anspruch 1 bis 5, **dadurch gekennzeichnet,** dass der obere Kragen (10.1) und der untere Kragen (10.2) an dem Befestigungselement (10) ausgebildet sind.

7. Beschlag nach einem der Ansprüche 1 bis 6, **dadurch gekennzeichnet,** dass der Verbinder (8) aus einem metallischen Material besteht.

8. Beschlag nach einem der Ansprüche 1 bis 7, **dadurch gekennzeichnet**, dass der Halter (6) zur höhenveränderlichen Abstützung des Verbinders mit einer Bohrungsreihe (12) ausgebildet ist, und der Verbinder (8) über ein in eine Bohrung (12) einführbares Höhenverstellelement (15) in unterschiedlichen Höhenlagen an dem Halter (6) festlegbar ist.

9. Beschlag nach einem der Ansprüche 1 bis 8, **dadurch gekennzeichnet,** dass an einem der gegensinnig ausgerichteten Arme (8.1, 8.2) ein Rastelement zur Einführung in eine im Halter (6) vorgesehene Bohrung (12) angeordnet ist.

10. Beschlag nach Anspruch 9, **dadurch gekennzeichnet**, dass der Arm (8.1) im wesentlichen halbschalenförmig ausgebildet ist und an einem am Halter (6) vorgesehenen Widerlager festlegbar ist.

11. Beschlag nach Anspruch 10, **dadurch gekennzeichnet,** dass an dem Halter (6) ein Befestigungselement (10) festgelegt ist, das zumindest einen Aufnahmeraum zur Anordnung und Abstützung des Armes (8.1) aufweist.

12. Beschlag nach Anspruch 11, **dadurch gekennzeichnet,** dass das Befestigungselement als Höhenversteller ausgebildet ist

## Claims

1. Fitting (4) for a piece of furniture or the like, in particular for cupboards such as kitchen corner cupboards (1), for pivotally mounting objects such as shelves (5) using a holder (6), for example a supporting column by means of which objects such as shelves (5) can be supported by means of a connector (8), the connector (8) comprising at least one connector arm (8.1, 8.2), forming an open bearing bushing, for encompassing the holder (6) in regions, and a gap (8.3) being formed on the connector (8), by means of which gap the holder (6) can be inserted into an inner space of the arm (8.1, 8.2) of the connector for mounting the connector (8) on the holder (6), the connector comprising two connector arms (8.1, 8.2) oriented in an opposing manner, the gap (8.3) being formed between the arms (8.1, 8.2), and the inner space being formed by the space between the arms (8.1, 8.2), **characterised in that** the holder (6) comprises an upper and a lower collar (10.1, 10.2) on which, when mounted, the connector (8) is supported at the top and at the bottom.

2. Fitting according to claim 1, **characterised in that** the end regions of the arms (8.1, 8.2) oriented in an opposing manner overlap at a vertical spacing relative to one other.

3. Fitting according to either claim 1 or claim 2, **characterised in that** the gap (8.3) formed between the arms (8.1, 8.2) is obliquely oriented and the adjacent edges of the arms (8.1, 8.2) which face each other have oblique regions, the end regions of the arms (8.1, 8.2) reducing in size at the ends thereof.

4. Fitting according to any of claims 1 to 3, **characterised in that** the connector (8) can be mounted on the holder (6) without the use of tools.

5. Fitting according to any of claims 1 to 4, **characterised in that** the connector (8) is supported on the holder (6) by means of a fastening element (10) which can be fixed on the holder so as to be adjustable vertically.

6. Fitting according to claims 1 to 5, **characterised in that** the upper collar (10.1) and the lower collar (10.2) are formed on the fastening element (10).

7. Fitting according to any of claims 1 to 6, **characterised in that** the connector (8) consists of a metallic material.

8. Fitting according to any of claims 1 to 7, **characterised in that** the holder (6) is formed having a row (12) of holes for supporting the connector in a vertically adjustable manner, and the connector (8) can be fixed on the holder (6) in different vertical positions by means of a vertical adjustment element (15) which can be inserted into a hole (12).

9. Fitting according to any of claims 1 to 8, **characterised in that** a catch element for inserting into a hole (12) provided in the holder (6) is arranged on one of the arms (8.1, 8.2) oriented in an opposing manner.

10. Fitting according to claim 9, **characterised in that** the arm (8.1) is substantially configured as a half-shell and can be fixed on an abutment provided on the holder (6).

11. Fitting according to claim 10, **characterised in that** a fastening element (10) is fixed on the holder (6) and comprises at least one receiving space for arranging and supporting the arm (8.1).

12. Fitting according to claim 11, **characterised in that** the fastening element is formed as a vertical adjuster.

## Revendications

1. Armature (4) destinée aux meubles et constructions similaires, notamment aux armoires, comme par exemple les armoires d'angle de cuisine (1), pour la fixation pivotante d'objets comme par exemple des tablettes (5), avec un support (6) (par exemple une potence) sur lequel sont fixés des objets comme par exemple des tablettes (5) à l'aide d'une attache (8), cette attache (8) possédant au moins un bras (8.1, 8.2) formant un coussinet de pivot ouvert pour la saisie du support (6) et présentant, au niveau de l'attache (8), une fente (8.3) par laquelle le support (6) peut s'insérer dans un espace intérieur du bras (8.1, 8.2) de l'attache pour le montage de l'attache (8) au support (6) ; l'attache présente deux bras (8.1, 8.2) orientés en sens inverse, la fente (8.3) est réalisée entre les deux bras (8.1, 8.2), l'espace intérieur est constitué par l'espace entre les bras (8.1, 8.2), (1) le support (6) présente un col supérieur et un col inférieur (10.1,10.2) sur lequel l'attache (8) montée vient s'appuyer en haut et en bas.

2. Armature selon la revendication 1, **caractérisée par le fait** que les bouts des bras orientés en sens inverse (8.1, 8.2) se chevauchent suivant l'écartement en hauteur.

3. Armature selon l'une des revendications 1 ou 2, **caractérisée par le fait** que la fente formée entre les bras (8.1, 8.2) présente une orientation inclinée et que les bords contigus des bras (8.1, 8.2), tournés l'un vers l'autre, ont des zones obliques, alors que les bouts des bras (8.1, 8.2) rétrécissent à leurs extrémités.

4. Armature selon l'une des revendications 1 à 3, **caractérisée par le fait** que l'attache (8) se laisse monter de manière mobile sur le support (6).

5. Armature selon l'une des revendications 1 à 4, **caractérisée par le fait** que l'attache (8) est soutenue au niveau du support (6) par un élément de fixation (10) réglable en hauteur qui se laisse fixer sur le support.

6. Armature selon les revendications 1 à 5, **caractérisée par le fait** que le col supérieur (10.1) et le col inférieur (10.2) sont réalisés sur l'élément de fixation (10).

7. Armature selon l'une des revendications 1 à 6, **caractérisée par le fait** que l'attache (8) est réalisée dans un matériau métallique.

8. Armature selon l'une des revendications 1 à 7, **caractérisée par le fait** que le support (6) est réalisé avec une rangée de trous percés (12) pour pouvoir soutenir l'attache à des hauteurs variables et que l'attache (8) se laisse fixer à différentes hauteurs sur le support (6) à l'aide d'un élément de réglage en hauteur (15) insérable dans un trou percé (12).

9. Armature selon l'une des revendications 1 à 8, **caractérisée par le fait** que sur l'un des bras orientés en sens inverse (8.1, 8.2) se trouve un élément de verrouillage destiné à s'introduire dans un trou percé (12) prévu dans le support (6).

10. Armature selon la revendication 9, **caractérisée par le fait** que le bras (8.1) est réalisé, pour l'essentiel, en forme de demi-coquille et se laisse fixer à une butée prévue sur le support (6).

11. Armature selon la revendication 10, **caractérisée par le fait** que se trouve, sur le support (6), un élément de fixation (10) qui présente au moins un logement pour disposer et soutenir le bras (8.1).

12. Armature selon la revendication 11, **caractérisée par le fait** que l'élément de fixation est réalisé en tant que dispositif de réglage en hauteur.
